Europäisches Patentamt

European Patent Office

Office européen des brevets

(19)

(11) Veröffentlichungsnummer: **0 170 801**
**A2**

(12) # EUROPÄISCHE PATENTANMELDUNG

(21) Anmeldenummer: **85106047.5**

(22) Anmeldetag: **17.05.85**

(51) Int. Cl.⁴: **C 04 B 28/18**
// (C04B28/18, 14:18, 18:14)

(30) Priorität: **04.08.84 DE 3428880**

(43) Veröffentlichungstag der Anmeldung: **12.02.86**
**Patentblatt 86/7**

(84) Benannte Vertragsstaaten: **AT BE CH DE FR GB IT LI LU NL SE**

(71) Anmelder: **Degussa Aktiengesellschaft, Weissfrauenstrasse 9, D-6000 Frankfurt am Main 1 (DE)**

(72) Erfinder: **Gliem, Sabine, Fechenheimerstrasse 4, D-6000 Frankfurt am Main (DE)**
Erfinder: **Kleinschmit, Peter, Dr., Wildaustrasse 19, D-6450 Hanau 9 (DE)**
Erfinder: **Schwarz, Rudolf, Dr., Taunusstrasse 2, D-8755 Alzenau-Wasserlos (DE)**

(54) **Verfahren zur Herstellung von feuerbeständigen, massgenauen Calciumsilikat-Formteilen.**

(57) Calciumsilikat-Formteile mit niedriger scheinbarer Dichte werden hergestellt, indem man ein Xonotlit-Gel in einem Autoklaven herstellt, dieses mit Perlit und gegebenenfalls weiteren Zuschlagstoffen vermischt, formt, trocknet und gegebenenfalls tempert. Das Xonotlit-Gel kann aus Calciumhydroxid, Wasser und einer Kieselsäure liefernden Quelle, wie z.B. FeSi-Flugstaub hergestellt werden.

Die Calciumsilikat-Formteile werden als Wärmedämmstoffe verwendet.

01 84 170 FH

Degussa Aktiengesellschaft
D-6000 Frankfurt am Main 1

Verfahren zur Herstellung von feuerbeständigen,
maßgenauen Calciumsilikat-Formteilen

Die Erfindung betrifft ein Verfahren zur Herstellung von
feuerbeständigen, maßgenauen Calciumsilikat-Formteilen
mit einer niedrigen scheinbaren Dichte, die vorzugsweise
90 bis 150 g/l betragen kann.

Calciumsilikat-Formteile, die für Isolationszwecke bestimmt sind, müssen in der Regel eine möglichst hohe Wärmebeständigkeit und eine möglichst geringe scheinbare Dichte,
worunter das spezifische Gewicht des Formkörpers und nicht
des Materials verstanden wird, aufweisen. In vielen Fällen
ist gleichermassen eine hohe Festigkeit zu fordern.

Es ist bekannt, isolierende Formteile mit geringer Dichte
( $<$ 0,15 g/ml) aus Kalksandstein mit Xonotlit-Struktur herzustellen. Dabei wird Flugstaub aus der Herstellung von
Silicium, Siliciumcarbid oder Ferrosilicium mit Kalk und
Wasser zusammengerührt, diese Mischung bis zur Gelbildung
erwärmt, das Gel verknetet, entwässert, unter Druck geformt
und anschliessend einer hydrothermalen Behandlung im Autoklaven unterworfen. (DE-AS 24 54 875)

Dieses Verfahren hat den Nachteil, daß es sehr zeit- und
energieaufwendig ist, weil die Formgebung durch Druck-

-3-

giessen unter hydrothermalen Bedingungen in einem Autoklaven stattfinden muß.

Nachteiligerweise treten bei der Umsetzung der Formteile
im Autoklaven auch Reaktionen der Faser bzw. der anderen
Zuschlagstoffe ein. Die Folge davon ist, daß die mechanische Festigkeit der Formteile beeinträchtigt wird. Man hat
zwar versucht, diese Nachteile durch niedrigere Reaktionstemperatur und längere Reaktionszeit bzw. durch eine höhere
Reaktionstemperatur und kürzere Reaktionszeit bei der Autoklavenreaktion auszugleichen, mußte dabei aber eine Herabsetzung der Anwendungstemperatur in Kauf nehmen. Dies bedeutet, die erhaltenen Produkte weisen keine ausreichende
Temperaturstabilität auf.

Ein weiterer Nachteil des bekannten Verfahrens ist, daß die
Stärke der Formplatten bzw. Formkörper auf 10 cm begrenzt
ist. Bei einer grösseren Stärke der Formteile reagiert die
Mischung bei der Autoklavenreaktion nicht durch. Die Folge
davon ist eine geringere Schrumpfungsbeständigkeit bzw. geringere Temperaturstabilität. Dieser Nachteil kann zwar
durch die Verwendung von höheren Litergewichten ausgeglichen werden. Diese höheren Litergewichte sind jedoch nicht
erwünscht.

Die bei den bekannten Verfahren erhaltenen Formplatten weisen nachteiligerweise Ränder auf, die nach der Autoklavenreaktion gesäumt werden müssen. Der dabei anfallende Verschnitt in Höhe von ca. 10 % der Formplatten kann nicht
weiterverwenden werden.

-4-

Ein wesentlicher Nachteil des bekannten Verfahrens liegt darin, daß man keine Segmente oder Halbschalen bei der Autoklavenreaktion umsetzen kann, weil diese Teile während der Reaktion ihre Form verändern. Man war daher gezwungen, Segmente oder Halbschalen aus Formplatten mittels eines zusätzlichen Arbeitsganges herauszufräsen. Der dabei anfallende Verschnitt konnte nicht mehr verwendet werden.

Aufgabe der Erfindung ist ein Verfahren zur Herstellung von feuerbeständigen, maßgenauen Calciumsilikatformteilen mit einer niedrigen scheinbaren Dichte, welches die aufgezeigten Nachteile nicht aufweist.

Gegenstand der Erfindung ist ein Verfahren zur Herstellung von feuerbeständigen, maßgenauen Calciumsilikat-Formteilen mit einer niedrigen scheinbaren Dichte, die vorzugsweise 90 bis 150 g/l betragen kann, welches dadurch gekennzeichnet ist, daß man ein Xonotlit-Gel in einem Autoklaven herstellt, dieses Xonitlit-Gel mit Perlit und gegebenenfalls mit die Festigkeit erhöhenden Zuschlagstoffen vermischt, die so erhaltene Mischung formt, trocknet und gegebenenfalls tempert.

Erfindungsgemäß kann man das Xonotlitgel herstellen, indem man Calciumhydroxid und eine Kieselsäure liefernde Verbindung im Molverhältnis $Ca(OH)_2$ zu $SiO_2$ 1:1 bis 1:1,5 bei Raumtemperatur in Wasser dispergiert, diese Mischung in einem Autoklaven bei Temperaturen über 200°C und autogenem Druck umsetzt.

In einer bevorzugten Ausführungsform der Erfindung kann man als Kieselsäure liefernde Verbindung Quarz und insbesondere FeSi-Flugstaub verwenden.

-5-

0-44918

FeSi-Flugstaub entsteht bei der Herstellung von metallischem Silicium, von Siliciumcarbid oder Ferrosilicium. Dabei werden kristalline Kieselsäure ($SiO_2$) hoher Reinheit sowie Kohlenstoff mit den anderen Rohstoffen gemischt und in einem elektrischen Ofen geschmolzen. Die Ofeninnentemperatur erreicht 2000°C oder mehr, so daß das Siliciumdioxid zu Silicium reduziert und verdampft wird. Das verdampfte Silicium reagiert mit dem in der Luft enthaltenen Sauerstoff zu sehr feinteiliger amorpher Kieselsäure, im nachstehenden auch einfach als FeSi-Flugstaub bezeichnet. Der FeSi-Flugstaub enthält neben $SiO_2$ weitere Bestandteile und muß in Staubsammlern abgeschieden werden, weil er sonst zu einer erheblichen Luftverunreinigung führen würde.

Es ist einer der Vorzüge des erfindungsgemäßen Verfahrens, eine nutzbringende Verwendungsmöglichkeit für den FeSi-Flugstaub aufzuzeigen. Dabei lassen sich nach dem Verfahren der Erfindung Formteile aus Calciumsilikat mit hervorragenden Eigenschaften erzeugen.

Der in dem erfindungsgemäßen Verfahren verwendete FeSi-Flugstaub besteht vorzugsweise aus 85 bis 98 Gew.-% amorpher Kieselsäure, sowie 15 bis 2 Gew.-% Metalloxiden und Kohlenstoff. Die feinen Teilchen des Flugstaubes liegen unter 0,1 µm und er ist daher gegenüber Calciumhydroxid sehr reaktionsfähig.

Charakteristisch für das erfindungsgemäße Verfahren ist, daß vor der Reaktion im Autoklaven keine Vorreaktion stattfinden darf. Diese würde die sich sogar ungünstig auf die Verarbeitbarkeit des Endproduktes auswirken. Die wässrige Suspension wird ohne jegliche Vorbehandlung direkt im Autoklaven zur Reaktion gebracht.

0-44918

- Die Xonotlitstruktur ist sowohl von der Zeitdauer der Reaktionsführung als auch von der Temperatur abhängig. Die optimale Xonotlitstruktur für das erfindungsgemäße Verfahren wird bei Temperaturen von 240 bis 260°C und dem sich dabei einstellenden autogenen Druck über einen Zeitraum von mindestens 4, vorzugsweise 6 Stunden erzielt.

- Durch den sehr geringen Feststoffgehalt des Reaktionsgemisches und die dadurch bedingte niedrige Viskosität kann während der Reaktion gerührt werden, ohne daß das Xonotlitgel zerstört wird. Ein Absetzen des Feststoffes wird dadurch verhindert. Vorzugsweise wird bei einem Feststoffgehalt von 4 bis 6 Gew.-%, bezogen auf die Gesamtmischung, gearbeitet.

Das auf diesem Wege erhaltene Xonotlitgel zeichnet sich durch seine problemlose Handhabung sowie anschliessende Verarbeitung aus.

Würde man ein Xonotlitgel mit einem Feststoffgehalt wesentlich über 6 Gew.-% verwenden, so stiege die Viskosität beträchtlich an, wodurch die Verarbeitung erschwert würde. Würde man zur Einarbeitung von Zuschlagstoffen in das Xonotlitgel mit über 6 Gew.-% die dann notwendigen Scherkräfte anwenden, so würde die Gelstruktur zerstört werden. Um trotzdem ein schrumpfungsfreies Trocknen der daraus hergestellten Formteile noch gewährleisten zu können, müßte man die Materialdichte entsprechend steigern. Die Litergewichte der Formteile würden dann über 200 g/l liegen.

Bei Xonotlitgelen mit einem Feststoffgehalt unter 4 Gew.-% sind die Xonotlitteilchen zu fein, weil man dann bei Formteilen mit Litergewichten unter 200 g/l kein schrumpfungsfreies Trocknen mehr durchführen kann.

Bei einem Feststoffgehalt von 4 bis 6 Gew.-% erhält man ein Xonotlitgel, das sehr gut pumpfähig und zusätzlich stabil gegen nicht allzu starke Scherkräfte ist. Die Einmischbarkeit von Zusatzstoffen ist möglich. So kann als Zusatzstoff Perlit nach dem Autoklavenprozeß zugemischt werden, ohne daß das Xonotlitgel dabei zerstört wird.

Perlit besitzt im allgemeinen eine sehr niedrige spezifische Schüttdichte im Bereich von 50 bis 100 kg/m³ und eine Korngröße von 0,5 bis 6 mm. Mischt man Perlit in das pumpfähige Xonotlitgel ein, so wird sofort ein großer Teil des überschüssigen Wassers vom Perlit aufgenommen. Es entsteht eine dickbreiige Masse, die man, ohne daß man allzuviel Wasser abpressen muß, zu Platten oder Formteilen, die schon im feuchten Zustand sehr stabil sind, verpressen kann. Man kann auf diese Weise mit dem erfindungsgemäße Verfahren Litergewichte der Formteile von 90 bis 150 g/l erreichen.

Würde man ein Xonotlitgel ohne Zusatz von Perlit verpressen, so müßte man, um die gleiche Festigkeit im nassen Zustand zu erreichen, eine wesentlich grössere Menge überschüssigen Wassers abpressen. Das gleiche gilt auch bei bekannten Faserzusätzen, die nachteiligerweise zusätzlich noch wesentlich höhere Litergewichte, die > 180 g/l liegen, bewirken.

Wollte man Formteile mit Litergewichten von 90 bis 150 g/l ohne Perlitzusätze nach bekannten Verfahren erreichen, müßte man der Mischung vor der hydrothermalen Umsetzung im Autoklaven Asbestfasern zusetzen (US-PS 3 816 149) oder das Xonotlitgel in Formen gießen und trocknen (DE-AS 24 54 875). Dies hat den erheblichen Nachteil, daß das Material während des Trocknungsprozesses einerseits deformiert und rissig wird und andererseits auch beträchtlich schrumpft.

In einer bevorzugten Ausführungsform des erfindungsgemäßen Verfahrens wird, bezogen auf den Feststoffgehalt des trokkenen Isolierstoffes, ca. 40 bis 50 Gew.-% Perlit zugesetzt. Der Perlitzusatz verbessert durch seine relativ großen Gaseinschlüsse die Isolierwirkung.

Mit Perlitzusätzen bilden sich beim Tempern der Formteile an den Berührungsstellen zwischen Calciumsilikat und Perlit verschiedene Aluminiumsilikate. Diese führen zu einer Aushärtung bzw. zur zusätzlichen Verfestigung, ohne daß die Formteile schrumpfen oder deformiert werden. Bei entsprechender Dauerbelastung mit hohen Temperaturen sind die mit dem erfindungsgemäßen Verfahren hergestellten Formteile wesentlich stabiler als die mittels bekannter Verfahren hergestellten Calciumsilikatformteile. Diese zerfallen bei langer Standzeit und hoher Temperaturbelastung zu Pulver.

Weiterhin besitzen die bekannten Calciumsilikatprodukte im allgemeinen einen hohen Materialabrieb, was zu einer Staubbelästigung bei der Handhabung der Formteile führt.

Bei dem erfindungsgemäßen Verfahren bildet sich dagegen durch die innere Verkettung der einzelnen Xonotlitteilchen untereinander eine abriebfeste Haut auf der Oberfläche der Formteile. Eine Staubbelästigung bei der Handhabung der Formteile (Sägen oder Schneiden) tritt nicht auf.

Bei dem erfindungsgemäßen Verfahren können zusätzlich nach der Herstellung des Xonotlitgels gemeinsam mit dem Perlit als Zuschlagstoffe bekannte Fasern zur weiteren mechanischen Verfestigung der Formteile eingearbeitet werden.

Durch die Zugabe der Fasern kann eine Steigerung der mechanischen Stabilität der Platten erzielt werden. Eine dabei eintretende Steigerung des Litergewichtes kann durch verstärktes Abpressen von überschüssigem Wasser kompensiert werden, wobei Litergewichte von 150 bis 170 g/l nicht überschritten werden. Als Faser eignen sich alle organischen sowie anorganischen Fasertypen, da die Faser erst nach der hydrothermalen Reaktion in die Suspension eingemischt wird.

Das erfindungsgemäße Verfahren weist die folgenden Vorteile gegenüber den bekannten Verfahren auf:

- Es können bei den Formteilen extrem niedrige Litergewichte vorzugsweise zwischen 90 bis 150 g/l eingestellt werden.
- Ein formstabiles Trocknen der Formteile kann erreicht werden.
- Die Mischung, bestehend aus Xonotlitgel, Perlit und gegebenenfalls Zuschlagstoffen, kann im feuchten Zustand gut verarbeitet werden, wobei Formteile mit hoher Festigkeit erreicht werden können.
- Die Formteile können im trockenen Zustand gut geschnitten werden.
- Hohe Temperaturstabilität.

Bei dem erfindungsgemäßen Verfahren können vorteilhafterweise Formteile, wie Halbschalen oder Segmente mit hoher Maßgenauigkeit hergestellt werden. Diese Formteile ändern

-10-

0-44918

während des Trocknens nicht ihre Form.

Ein weiterer Vorteil des erfindungsgemäßen Verfahrens zeigt sich auch darin, daß die Zuschlagstoffe wie Fasern etc. während des Trocknens nicht umgesetzt werden, sodaß die gewünschte mechanische Festigkeit der Formteile voll erhalten bleibt.

Aufgrund der vorgezogenen Autoklavenreaktion können mittels des erfindungsgemäßen Verfahrens Formteile mit einer beliebigen Stärke und Form hergestellt werden. Ein Ausfräsen und der damit verbundene Verschnitt entfallen daher.

Die beim Verformen anfallenden Mischungsreste können ohne weiteres der ursprünglichen Mischung zugesetzt werden.

Bei dem erfindungsgemäßen Verfahren können also beliebige Formteile ohne den zusätzlichen Arbeitsgang des Fräsens und ohne Substanzverlust hergestellt werden.

Beispiele

Wesentliches Beurteilungskriterium der Qualität der Formkörper ist zum einen die mechanische Stabilität, die sich z.B. in der Biegefestigkeit, der Druckfestigkeit, der Abriebfestigkeit und mechanische Bearbeitbarkeit ausdrückt und zum anderen die Wärmeleitfähigkeit sowie die thermische Formfestigkeit.

Die Prüfung dieser Eigenschaften erfolgt an runden Platten (Formteilen) mit den Abmessungen Ø 100 x 10 mm.

-11-

Der in den Beispielen verwendete FeSi-Flugstaub hat die
folgende Zusammensetzung:

| Flugstaub | Gew.-% |
|-----------|--------|
| $SiO_2$ | 96,77 |
| $Fe_2O_3$ | 0,072 |
| $MnO_2$ | 0,033 |
| $Al_2O_3$ | 0,37 |
| CaO | 0,18 |
| MgO | 0,26 |
| $K_2O$ | 0,72 |
| $Na_2O$ | 0,14 |
| Summe | 98,545 |

| | |
|---|---|
| Gl.Verl. 2h/1000°C | 1,1 |

| Elementar- | C | 0,64 |
|------------|---|------|
| analyse | H | 0,26 |
| 1000°C + | | |
| $V_2O_5$-Zuschlag | | |

In den Beispielen 1 und 2 sollen die Reaktionsbedingungen
zur Herstellung eines stabilen Xonotlitgels abgegrenzt werden. Als stabil wird ein Xonotlitgel dann angesehen, wenn
die fertigen Formteile beim Trocknen nicht oder zumindest nur
geringfügig schrumpfen.

Beispiel 1

205 g FeSi-Flugstaub und 245 g Calciumhydroxid (Molverhältnis
$Ca(OH)_2:SiO_2$ 1:1) werden in 10 l 20°C warmes Wasser eingemischt. Es wird eine homogene wässrige Suspension mit einem
Feststoffgehalt von 4,6 Gew.-% hergestellt. Die wässrige Sus-

-12-

0-44918

pension wird in einem Autoklaven auf 240°C erhitzt. Es stellt sich dabei ein autogener Druck von 33 bar ein. Nach 2, 4 und 6 h Reaktionszeit wird die Suspension auf Raumtemperatur abgekühlt. Bezogen auf das Gesamtgewicht der wässrigen Suspension werden 2,5 Gew.-% Perlit zugesetzt. Das Gemisch wird zu runden Platten mit den Maßen Ø 100 mm mal 10 mm verpreßt, wobei ca. 40 bis 50 Gew.-% Wasser abgepreßt werden. Die noch Wasser enthaltenden Platten werden anschließend bei 150°C getrocknet.

| Reaktionszeit bei 240°C | Gewicht der Platten g | | Trocknungsschrumpfung % | | Litergewicht |
| | vor der Formgebung | nach der Formgebung | Durchmesser | Höhe | nach dem Trocknen g/1 |
| --- | --- | --- | --- | --- | --- |
| 120 min | 250 | 142 | 3,6 | 4 | 115 |
| | 300 | 146 | 3,3 | 5,5 | 135 |
| 240 min | 250 | 135 | 3,6 | 5,0 | 115 |
| | 250 | 135 | 3,6 | 4,5 | 114 |
| 360 min | 200 | 136 | 2,0 | 2,0 | 96 |
| | 250 | 145 | 1,6 | 2,5 | 118 |
| | 250 | 138 | 1,9 | 2,5 | 116 |
| | 250 | 142 | 2,0 | 2,5 | 107 |
| | 250 | 143 | 2,0 | 2,5 | 103 |
| | 250 | 143 | 2,0 | 2,5 | 108 |
| | 250 | 143 | 2,0 | 2,5 | 100 |
| | 250 | 144 | 2,0 | 2,5 | 99 |

Aus den Versuchsergebnisse für die Trocknungsschrumpfung der Platten bei entsprechender Trocknungstemperatur ist zu entnehmen, daß die besten Ergebnisse bzw. die geringste Schrumpfung der Platten mit dem Xonotlitgel mit der längsten Reaktionszeit erreicht wird.

-13-

Die Reaktionsdauer steht in direktem Zusammenhang mit der Kristallausbildung, d.h. je länger die Reaktionszeit ist, desto besser ist die Xonotlitstruktur ausgebildet und desto bessere Produkteigenschaften werden erreicht.

Ein optimales Xonotlitgel wird bei einer Reaktionstemperatur von 240°C, dem sich dabei einstellenden Druck von 33 bar und einer Reaktionszeit von 6 h erreicht.

Dieses Xonotlitgel wird bei den folgenden Beispielen als Ausgangsstoff eingesetzt. Die unterschiedlichen Litergewichte werden durch unterschiedliches Auspressen erhalten und beziehen sich jeweils auf die getrocknete Platte.

Beispiele 2 bis 9

Für die Beispiele 2,3,4 und 5 werden gemäß Beispiel 1 Formplatten unter einer Reaktionszeit von 360 min hergestellt.

Für die Beispiele 6,7,8 und 9 wird das Xonotlitgel gemäß Beispiel 1 unter einer Reaktionszeit von 360 min hergestellt.

-14-

Beispiele 2 - 9

| Zusammensetzung und Verarbeitung | | Litergewicht n.d. Trocknen bei 150°C in g/l | Trocknungsschrumpfung Durchmesser in % | Höhe in % | Bruchfestigkeit in N |
|---|---|---|---|---|---|
| Beisp.2) | 62 % Xonotlit | 100 | 2,3 | 2,0 | 83 |
| | 38 % Perlit | | | | |
| Beisp.3) | 62 % Xonotlit | 97 | 2,3 | 2,0 | 85 |
| | 38 % Perlit | | | | |
| Beisp.4) | 63 % Xonotlit | 144 | 2,8 | 2,3 | 238 |
| | 37 % Perlit | | | | |
| Beisp.5) | 63 % Xonotlit | 146 | 2,9 | 2,4 | 233 |
| | 37 % Perlit | | | | |
| Beisp.6) | 46 % Xonotlit | 103 | 1,8 | 1,2 | 143 |
| | 39 % Perlit | | | | |
| | 15 % Aluminium-silikatfaser | | | | |
| Beisp.7) | 46 % Xonotlit | 103 | 1,8 | 2,0 | 140 |
| | 39 % Perlit | | | | |
| | 15 % Aluminium-silikatfaser | | | | |
| Beisp.8) | 44 % Xonotlit | 130 | 1,9 | 0,8 | 236 |
| | 40 % Perlit | | | | |
| | 16 % Aluminium-silikatfaser | | | | |
| Beisp.9) | 44 % Xonotlit | 129 | 1,9 | 2,0 | 237 |
| | 40 % Perlit | | | | |
| | 16 % Aluminium-silikatfaser | | | | |

84 170 FH — 15. —

0170801

Fazit aus den Beispielen 2 bis 9:

Mit Platten extrem niedriger Litergewichte um ca. 100 g/l erreicht man durch den Zusatz einer Aluminiumsilikatfaser eine Steigung der mechanischen Stabilität um ca. 65 %.

Bei höheren Litergewichten zwischen 130 und 150 g/l bringt der Zusatz der Aluminiumslikatfaser keine weitere Steigerung der Bruchfestigkeit.

Beispiel 10

Zur Bestimmung der Temperaturstabilität wurden die Platten bei verschiedenen Temperaturen (600°C, 700°C, 800°C, 900°C, 1000°C, 1050°C, 1100°C) über einen Zeitraum von 24 h geglüht.

Die Anwendungsgrenztemperatur ist die angegebene Klassifizierungstemperatur bei der die Schwindung nach DIN 51066 und ASTM C 533 bei 24-stündiger allseitiger Temperatureinwirkung 2 % als Mittelwert nicht überschreiten darf. Bei der Prüfung nach DIN 51066 wird der Mittelwert aus Längen-, Breiten- und Dickenschwindung errechnet.

Bei der Prüfung nach ASTM C 533 wird jedoch nur die Schwindung in Plattenlängsrichtung angegeben. Da die Platten aber in Längsrichtung die geringste Schwindung aufweisen, liegen die Werte nach ASTM C 533 immer unter den gemäß der DIN 51066 ermittelten Werte.

0-44918

Die zu Vergleichszwecken mit vermessene Formplatte der Saline Lüneburg (Salü®) hat die folgende Zusammensetzung: 90 % Calciumsilikat und 10 % Mineralfaser.

Die erfindungsgemäßen Formplatten werden gemäß Beispiel 2 bei einer Reaktionszeit von 6 Stunden hergestellt. Dabei wird zum einen das Xonotlitgel mit Perlit und zum anderen mit Perlit und Aluminiumsilikatfaser vermischt. Das unterschiedliche Litergewicht wird durch unterschiedlich starkes Abpressen des Wassers erhalten.

Messung der Schrumpfung bei verschieden Temperaturen nach 24 h

Als Vergleichsbeispiel wurde eine Isolierplatte von der Saline Lüneburg verwendet.

| Probe | Litergewicht der getrockneten Platten | Temperatur | Durchmesser-schrumpfung % | Höhen-schrumpfung % | Bemerkungen |
|---|---|---|---|---|---|
| Salü® von der Saline Lüneburg | 260 g/l | 600 °C | 0,2 | 0,4 | Die Proben sind bis ca. 900°C beständig. Bei 1000°C schrumpfen die Proben so extrem, daß sie sich deformieren und rissig werden |
| | | 700°C | 0,7 | 1,2 | |
| | | 800°C | 1,0 | 1,6 | |
| | | 900°C | 1,0 | 2,0 | |
| | | 1.000°C | 14,0 | 17,7 | |
| | | 1.050°C | | | |
| 60 % Xonot-lit 40 % Perlit | 100 g/l | 600°C | | | |
| | | 700°C | 0,4 | 0,4 | |
| | | 800°C | 0,6 | 0,4 | |
| | | 900°C | 0,6 | 1,6 | |
| | | 1.000°C | 0,9 | 0,8 | |
| | | 1.050°C | 1,5 | 1,2 | |
| | | 1.100°C | 9,0 | 8,1 | |
| | 150 g/l | 600°C | | | Die Proben sind bis 1.050°C beständig |
| | | 700°C | 0,4 | | |
| | | 800°C | 0,4 | | |
| | | 900°C | 0,5 | 0,8 | |
| | | 1.000°C | 0,8 | 0,9 | |
| | | 1.050°C | 1,7 | 2,4 | |
| | | 1.100°C | 12.0 | 12,1 | |
| 45 % Xonot-lit 15 % Alumi-nium-silikat-faser 40 % Perlit | 100 g/l | 600°C | | | |
| | | 700°C | 0,4 | | |
| | | 800°C | 0,6 | 0,4 | |
| | | 900°C | 0,6 | 1,2 | |
| | | 1.000°C | 0,9 | 2,4 | |
| | | 1.050°C | 1,5 | 1,6 | |
| | | 1.100°C | 11,4 | 13,2 | |
| | 130 g/l | 600°C | | | |
| | | 700°C | 0,4 | 0,4 | |
| | | 800°C | 0,5 | 0,4 | |
| | | 900°C | 0,5 | 0,8 | |
| | | 1.000°C | 0,8 | 1.1 | |
| | | 1.050°C | 2,0 | 1,2 | |
| | | 1.100°C | 12,5 | 14,5 | |

Bei bekannten Herstellungsverfahren (z.B. gemäß DE-AS 24 54 875) ist eine Vorreaktion notwendig. Zur Abgrenzung des erfindungsgemäßen Verfahrens gegenüber den bekannten Verfahren sollen die folgenden Beispiele 11 und 12 zeigen, daß eine Autoklaven-Vorreaktion bei der Calciumsilikatherstellung sich ungünstig auf das Endprodukt auswirkt.

Beispiel 11

102,5 g FeSi-Flustaub und 122,5 g Calciumhydroxid werden im Molverhältnis $Ca(OH)_2$ zu $SiO_2$ von 1:1 in 10 l Wasser suspendiert. Anschließend wird die 2,3 Gew.-% Feststoff enthaltende wässrige Suspension auf 65°C bei Atmosphärendruck erhitzt und 30 Minuten gerührt. Dieser niedrige Feststoffgehalt von 2,3 Gew.-% mußte gewählt werden, weil die Reaktionsmischung bei einem Feststoffgehalt von 4,6 Gew.-% im Autoklaven während der Umsetzung nicht mehr rührbar war. Das erhaltene Gel wird in einem Autoklaven auf 240°C erhitzt. Es stellt sich dabei ein Druck von 33 bar ein. Die Reaktionsdauer beträgt 6 h. Das entstandene Xonotlitgel wird auf Raumtemperatur abgekühlt. Bezogen auf das Gesamtgewicht der wässrigen Suspension werden 2,5 Gew.-% Perlit zugesetzt. Das Gemisch wird anschließend zu Platten verpreßt, wobei ca. 40 bis 50 Gew.-% Wasser abgepreßt werden. Die noch Wasser enthaltenden Platten werden anschliessend bei 150°C getrocknet. Die auf diesem Wege hergestellten Platten zeigen jedoch während der Trocknung eine derart extrem hohe Schrumpfung, sodaß sie als Isoliermaterial nicht verwendbar sind.

-19-

0-44918

### Beispiel 12

205 g FeSi-Flugstaub und 245 g Calciumhydroxid im Molverhältnis Ca(OH)$_2$ zu SiO$_2$ = 1:1 werden in 10 l Wasser suspendiert. Anschließend wird die 4,6 Gew.-% Feststoff enthaltende wässrige Suspension auf 65°C bei Atmosphärendruck erhitzt und 30 Minuten gerührt. Das erhaltene Gel wird in einem Autoklaven auf 240°C erhitzt. Es stellt sich dabei ein Druck von 33 bar ein. Schon nach kürzester Zeit bildet sich ein Xonotlitgel im Autoklaven, das so stark verdickt, daß der Rührer stecken bleibt. Die Reaktionsdauer beträgt 6 h. Das Xonotlitgel wird auf Raumtemperatur abgekühlt und direkt, aufgrund der extrem hohen Verdickung ohne den Zusatz von Perlit zu Platten verpreßt. Dabei wird ein Teil von dem überschüssigen Wasser je nach gewünschtem Litergewicht abgepreßt. Die noch Wasser enthaltenden Platten werden anschliessend bei 150°C getrocknet. Die auf diesem Wege hergestellten Platten zeigen jedoch während der Trocknung eine derart extrem hohe Schrumpfung, sodaß sie als Isoliermaterial nicht verwendbar sind.

Die folgenden Versuche dienen zur Verdeutlichung der Grenzen des erfindungsgemäßen Verfahrens.

### Beispiel 13

102,5 g FeSi-Flugstaub und 122,5 g Calciumhydroxid werden ohne Vorreaktion in 10 l Wasser bei 20°C eingemischt. Es wird eine homogene wässrige Suspension mit einem Feststoffgehalt von 2,3 Gew.-% erhalten. Die wässrige Suspension wird in einem Autoklaven auf 240°C erhitzt. Es stellt sich dabei ein Druck von 33 bar ein. Die Reaktionsdauer beträgt 6 h. Das entstandene Xonotlitgel wird auf Raumtemperatur abgekühlt. Der Feststoffgehalt der Suspension ist so gering, daß sich das Xonotlitgel zum Teil absetzt. Bezogen auf das Gesamtgewicht der wässrigen Suspension werden 2,5 Gew.-% Perlit zugesetzt. Das Gemisch wird anschließend zu Formteilen oder Platten verpreßt, wobei ca. 50 Gew.-% Wasser abgesaugt werden. Die noch Wasser enthaltenden Formteile werden anschließend bei 150°C getrocknet. Die auf diesem Wege hergestellten Formteile zeigen während der Trocknung eine extrem hohe Schrumpfung.

Beispiel 14

307,5 g FeSi-Flugstaub und 367,5 g Calciumhydroxid werden ohne Vorreaktion in 10 l Wasser bei 20°C eingemischt. Es wird eine homogene wässrige Suspension mit einem Feststoffgehalt von 6,9 Gew.-% erhalten. Die wässrige Suspension wird in einem Autoklaven auf 240°C erhitzt. Es stellt sich dabei ein Druck von 33 bar ein. Die Reaktionsdauer beträgt 6 h. Das entstandene Xonotlitgel wird auf Raumtemperatur abgekühlt. Durch den hohen Feststoffgehalt besitzt das Gel eine hohe Viskosität. Das Gel ist nicht mehr pumpfähig und die Einmischbarkeit des Perlits wird erschwert. Um Perlit (2,5 Gew.-%, bezogen auf das Gesamtgewicht der wässrigen Suspension) einzumischen, sind durch die hohe Viskosität des Systems stärkere Scherkräfte in einem noch pumpfähigen System notwendig. Das Gemisch wird anschliessend zu Platten verpreßt. Die noch Wasser enthaltenden Platten werden bei 150°C getrocknet. Durch den höheren Feststoffgehalt erhöhen sich die Litergewichte der fertigen Platten. Die Trocknungsschrumpfung der Platten verschlechtert sich durch die benötigten Scherkräfte zum Einmischen des Perlits.

84 170 FH                    - 21. -

| Gewicht der Proben g | | Trocknungsschrumpfung % | | Litergewicht nach dem Trocknen g/l |
|---|---|---|---|---|
| vor d.Form- gebung | nach d.Form- gebung | Durchmesser | Höhe | |
| 250 | 148 | 2,6 | 3,5 | 149 |
| 250 | 152 | 2,5 | 3,5 | 148 |
| 250 | 148 | 3,1 | 2,0 | 124 |

Die beste Homogenität und Pumpfähigkeit ist gegeben, wenn eine wässrige Suspension mit einem Feststoffgehalt von ca. 4,6 Gew.-% und der Flugstaub mit der folgenden Zusammensetzung verwendet wurde.

|  | % |
|---|---|
| Gl.Verlust | 2,20 |
| $SiO_2$ | 95,58 |
| $Fe_2O_3$ | 0,11 |
| $Al_2O_3$ | 0,20 |
| MgO | 0,31 |
| CaO | 0,10 |
| $Na_2O$ | 0,40 |
| $K_2O$ | 0,76 |
| $MnO_2$ | 0,008 |
| Summe | 99,67 |

Beispiel 15

200 g Quarzpulver (Firma Quarzwerke Frechen, Typ Sikron F 500) und 245 g $Ca(OH)_2$ (Molverhältnis 1:1) werden in 10 1 20°C warmen Wassers eingemischt. Es wird eine homogene wässrige Suspension hergestellt. Die wässrige Suspension wird in einem Autoklaven auf 240°C erhitzt. Es stellt sich dabei ein autogener Druck von 33 bar ein. Nach 6 h Reaktionszeit wird die Suspension auf Raumtemperatur abgekühlt. Bezogen auf das Gesamtgewicht der wässrigen Suspension werden 2,5 Gew.-% Perlit zugesetzt. Das Gemisch wird zu Platten verpreßt, wobei ca. 40 bis 50 % Wasser abgepreßt werden. Die noch Wasser enthaltenden Platten werden bei 150°C getrocknet.

| Gewicht der Proben g | | Trocknungsschrumpfung % | | Litergewicht nach dem Trocknen g/l |
|---|---|---|---|---|
| vor der Formgebung | nach der Formgebung | Durchmesser | Höhe | |
| 300 | 135 | 1,1 | 3,0 | 141 |

Degussa Aktiengesellschaft
D-6000 Frankfurt am Main 1

Verfahren zur Herstellung von feuerbeständigen,
maßgenauen Calciumsilikat-Formteilen

<u>Patentansprüche</u>

1. Verfahren zur Herstellung von feuerbeständigen, maßgenauen Calciumsilikat-Formteilen mit einer niedrigen
scheinbaren Dichte, die vorzugsweise von 90 bis 150 g/l,
betragen kann, <u>dadurch gekennzeichnet</u>, daß man ein
Xonotlit-Gel in einem Autoklaven herstellt, dieses
Xonotlit-Gel mit Perlit und gegebenenfalls mit die Festigkeit erhöhenden Zuschlagstoffen vermischt, die so erhaltene Mischung formt, trocknet und gegebenenfalls tempert.

2. Verfahren nach Anspruch 1, <u>dadurch gekennzeichnet,</u> daß
man das Xonotlitgel herstellt, indem man Calciumhydroxid
und eine Kieselsäure liefernde Verbindung im Molverhältnis $Ca(OH)_2$ zu $SiO_2$ von 1:1 bis 1:1,5 bei Raumtemperatur
in Wasser dispergiert, diese Mischung in einem Autoklaven
bei Temperaturen über 200°C und autogenem Druck umsetzt.

3. Verfahren nach den Ansprüchen 1 und 2, <u>dadurch gekenn-
zeichnet</u>, daß man als Kieselsäure liefernde Verbindung
FeSi-Flugstaub verwendet.

-2-